# EUROPEAN PATENT SPECIFICATION

(11) **EP 2 912 528 B1**
(45) Date of publication and mention of the grant of the patent: **04.12.2019**
(21) Application number: 13848814.3
(22) Date of filing: 18.10.2013
(51) Int. Cl.: B61L 15/00, B61L 25/02, B61L 27/00, G08B 13/08

(54) **RAILWAY TANK CAR SECURITY DEVICE**
SICHERHEITSVORRICHTUNG FÜR EISENBAHNTANKWAGEN
DISPOSITIF DE SÉCURITÉ DE WAGON-CITERNE DE CHEMINS DE FER

(30) Priority: 24.10.2012 US 201213659436
(43) Date of publication of application: 02.09.2015
(73) Proprietor: Amsted Rail Company, Inc., Chicago, IL 60606 (US)
(72) Inventor: LEFEBVRE, William, West Chester, PA 19382 (US); MARTIN, Andrew, West Chester, PA 19382 (US); BONNES, Matt, West Chester, PA 19382 (US)
(74) Representative: Dehns
(86) International application number: PCT/US2013/065682
(87) International publication number: WO 2014/066170

(56) References cited:
- EP-A2- 1 746 010
- US-A1- 2005 253 710
- US-A1- 2006 047 419
- US-A1- 2006 047 419
- US-A1- 2008 162 034
- US-A1- 2009 254 277
- US-A1- 2009 299 550
- US-B1- 6 704 626
- US-B2- 8 045 962
- US-B2- 8 045 962
- WICHELHAUS A: "Telematik im Schienengueterverkehr", ETR EISENBAHNTECHNISCHE RUNDSCHAU, HESTRA-VERLAG. DARMSTADT, DE, vol. 54, no. 5, 1 May 2005 (2005-05-01), pages 298-304, XP001525490,

## Description

### Background of the Invention

The present invention relates to a railcar sensing system and, more particularly, to a sensing system that monitors the hatch on a railway tank car. Further, global positioning data for the railcar is also sensed and utilized in the system.

It has become more important for owners and operators of railway freight cars and tank cars to be able to locate such railcars on a near real time basis. Further, from a security point of view, it is important for railway tank car operators to determine whether the hatch of such railway tank cars is open. The significance of such hatch being open on railway tank cars is that the hatch provides access to the piping for loading and unloading the contents of the tank car.

It is also an important consideration that the location of such railway freight cars and tank cars be taken into consideration when monitoring and sensing operating parameters such as the hatch on a tank car being open or closed. For example if a railway tank car is in a safe location, such as on the owner's premises and is undergoing a normal loading or unloading operation, it would be desirable not to receive a warning signal that the hatch has been opened or closed. Such additional performance characteristics of a system would decrease the number of warning signals to be processed.

A system for monitoring the status of shipment vehicles is known form US 2006/0047419 A1. A system for monitoring the hatch of a railcar is known from US 2009/0299550 A1.

### Summary of the Invention

Accordingly, it is an object of the present invention to provide a railcar sensing system that will monitor the location and hatch condition of a railway tank car.

It is a further object of the present invention to provide a railcar sensing system that monitors the location and hatch condition of the railway tank car, and compares the location of the railway tank car with a preselected series of safe locations.

It is a further object of the present invention to provide a railcar sensing system and, in particular, a railway tank car hatch condition monitoring system that provides a warning signal when the railway tank car is outside a certain preselected safe location and the hatch condition changes beyond a predetermined amount.

The invention is defined by the appended claims.

In one embodiment of the present invention, the railcar sensing system includes an accelerometer which is mounted on the hatch of the railway tank car. The accelerometer senses the orientation of the hatch with relation to the direction of gravity. The accelerometer sends a signal to a processing unit that is indicative of a change in orientation of the hatch more than a predetermined amount. A position sensing device is also part of the railcar sensing system of this embodiment of the present invention. The position sensing device detects the global position of the railcar and sends a signal representative of such position to the processing unit.

The processing unit sends a signal to a transmitting unit upon receipt of the signal from the accelerometer that the railway car hatch has been moved more than the predetermined amount. The processing unit also sends and compares the global position of the railcar to determine whether the railcar is within certain preselected safe zones. Such safe zones could correspond to usual loading and unloading locations for the railcar that would be stored in the processing unit. If the railcar is outside any of the preselected safe zones, the processing unit sends a signal to a transmitting unit which in turn sends a signal to a communication device that the railway tank car hatch orientation has changed more than a predetermined amount and that the railcar is outside of the preselected safe zone.

### Brief Description of the Drawings

In the drawings,
Fig. 1 is a block diagram outlining the system in accordance with an embodiment of the present invention;
Fig. 1A are detailed block logic diagrams of a railcar sensing system in accordance with an embodiment of the present invention;
Fig. 2 is a partial perspective view of a railcar sensing system with an embodied structure mounted to the hatch of a railway tank car, and
Fig. 3 is a perspective view of a railway tank car with a railcar sensing system installed on a hatch thereof.

### Detailed Description of the Invention

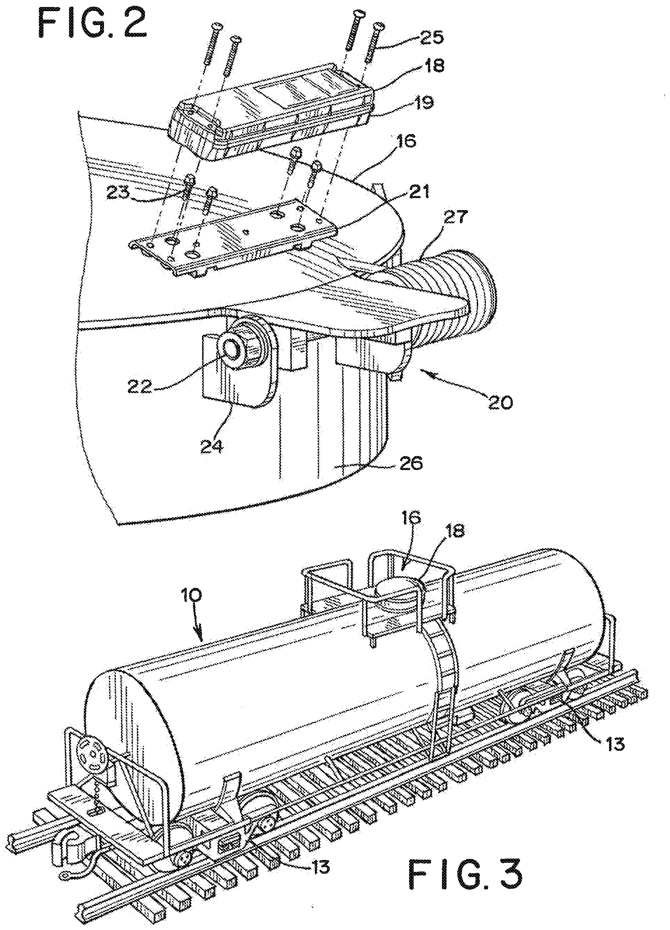

Referring now to Fig. 2 and Fig. 3 of the drawings, a railway tank car is shown generally at 10. Such railway tank car is comprised of the usual tank car body supported on longitudinally spaced railcar trucks 13. Railway tank car 10 includes a top mounted hatch 16. Hatch sensing body structure 18, which is a generally rectangular structure, is mounted directly to hatch 16 in this embodiment of the present invention. As shown in detail in Fig. 2, a sensing device mounting bracket 21 is affixed directly to hatch 16 using self tapping mounting screws 23 or other equivalent metal mounting screws. Hatch sensing body structure 18 is seen to comprise a rectangular sensing body unit 19 which is affixed to sensing mounting bracket 21 utilizing secure fasteners 25 which could be specially designed machine screws or similar screw like or bolt like devices.

Hatch 16 is a generally cylindrical structure, which fits on top of generally cylindrical hatch support 26 which itself extends upwardly from the top surface of railway tank car 10. Hatch hinge assembly 20 is comprised of hatch mounting hinges 24 which are affixed usually by welding to hatch support 26. Hatch hinge assembly 20 also comprises hatch hinge pin 22 which usually comprises an elongated machine bolt that extends through openings in hatch mounting hinges 24.

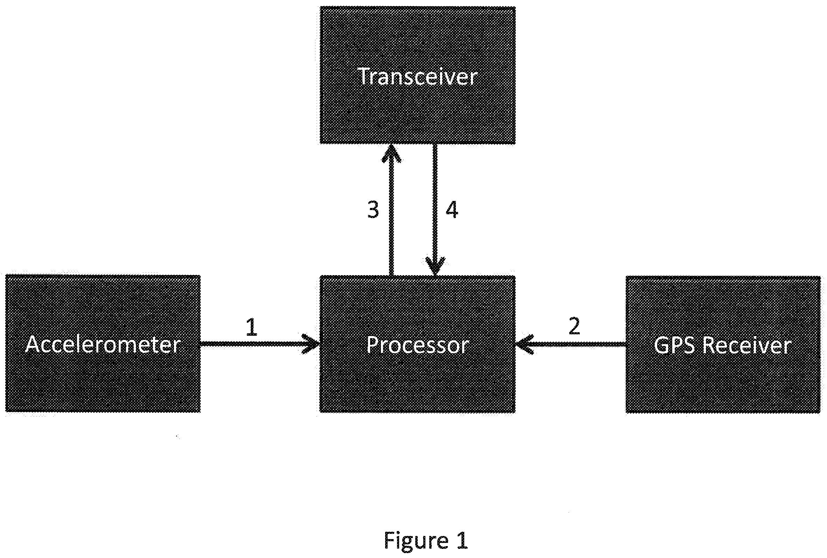

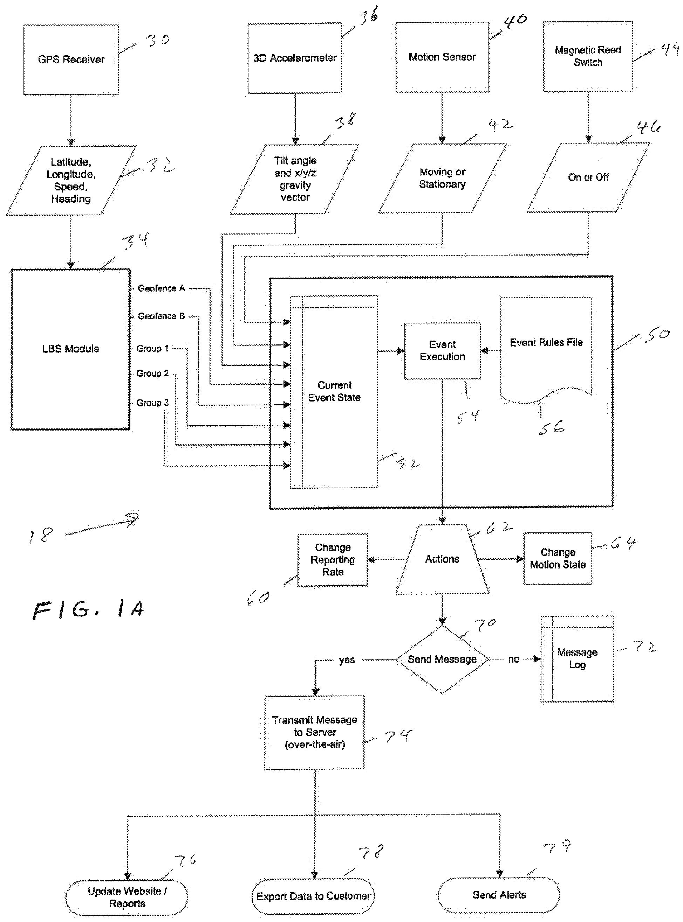

Referring now to figure 1, of the drawings, a block diagram outlining the communication of components used to process incoming information from the environment in which the tank car resides.

The processor collects data from the accelerometer (1) indicating that a hatch open or closed event has occurred. It then collects GPS data (2) to associate the hatch event to a specific location. The processor then determines if the event needs to be transmitted (3) to an external server and received an acknowledgement (4) that the event has been successfully received.

Referring now to Fig. 1A of the drawings, a logic diagram setting forth an operating embodiment of the railcar sensing system of the present invention is set forth.

A global positioning system receiver is shown at 30 which detects and provides a signal representative of the global position of the railway tank car 10, Sensing information 32 is also present which contains data from the global positioning sensing receiver 30 and also contains the speed and directional heading of railway tank car 10. This information is then sent to location processing module 34. Location processing module 34 has preselected geographic safe areas loaded therein. The global position of railcar 10 is compared within location processing module 34 to determine if railcar 10 is inside or outside any of the preselected safe geographic areas or zones. Such predetermined geographic areas or safe zones are typically customer locations wherein railway tank car 10 is typically loaded or unloaded and it could be expected that hatch 16 would be open when within such safe zones. Further, the significance of hatch 16 being open in that the piping associated and necessary for the loading and unloading of railway tank car 10 is located within hatch 16.

Accelerometer unit 36 is also a component of the railcar sensing system of this embodiment of the present invention and is also located within hatch sensing body structure 18, as is global positioning receiver 30 and location processing module 34. Accelerometer unit 36 senses the alignment of hatch 16 with regard to the orientation in relation to the direction of gravity. Tilt angle and gravity vector information 38 contains data from accelerometer 36 which determines if hatch 16 has been moved more than a preselected amount. If hatch 16 has been moved or rotated about hinges 24 more than the preselected amount, a representative signal is sent from angle sensing unit 38 to central processing unit 50.

A motion sensor 40 could also be a component of railcar sensing system of this embodiment of the present invention. Such motion sensor 40 would, when combined with a motion sensing parameter storage location 42, provide a signal to central processing unit 50 whether a railway tank car 10 is in motion or stationary.

Another possible component of the railcar sensing system in accordance with the present invention is a magnetic reed switch 44 that is combined with an on off unit 46 which together can be activated from a signal from central processing unit 50 on whether to sense or not sense motion of hatch 16.

Central processing unit 56 includes a current events state unit 52 which receives signals from location processing module 34, accelerometer and angle sensing unit 36 and 38, and possibly also motion sensor units 40 and 42 and magnetic reed switch units 44 and 46. Event state unit 52 compares the signal from location processing module 34 and determines whether railway tank car 10 is within or outside a preselected safe zone. Such preselected safe zone would usually be a customer selected loading or off loading location that is a preselected and stored within the railcar sensing system. If railway tank car 10 is within a safe zone, and a signal is received from accelerometer 36 and angle sensing unit 38 that hatch 16 has been moved or opened more than a predetermined amount, such signal will be processed by event state unit 52 and sent to event execution unit 54 which has preselected instructions from event rules unit 56. Such event rules unit 56 could be utilized to preselect safe zones or acceptable angles of hatch 16 movement. Event execution unit 54 would accordingly send a signal to action comparator unit 62 which has acknowledged that railway tank car 10 is within a safe zone. Accordingly, action comparator unit 62 would send an appropriate message to transmitting comparator 70 that railway tank car 10 is within a safe zone and that no alarm message would be sent, but rather a message would be sent to message log 72 that although hatch 16 has been moved or opened more than the preselected amount, as railway tank car 10 is within a safe zone, no alarms signal is needed. However, if railway tank car 10 is outside a preselected safe zone, event state unit 52 would receive such location information from location processing module 34, and upon receipt of a signal from accelerometer 36 that hatch 16 has been moved or opened more than a preselected amount, event state table 52 would send a signal to event execution unit 54 that such hatch 16 movement or opening has occurred. Accordingly, event execution unit 54 would send a signal to action comparator unit 62 which would in turn send a signal to transmitting comparator 70 that hatch 16 has been moved or opened more than a preselected amount, and that an alarm message must be sent to and would be sent to communication unit 74. Communication unit 74 in turn can provide a variety of messages including an update on a customer website 76, data of railway tank car 10 location and that hatch 16 has been moved or opened more than a preselected amount, as well as an alarm or alert message 79.

It is also noted that the change that reporting rate to determine the processing rate to sense both the global position of railway tank car 10 and any movement or opening of hatch 16 can be adjusted through reporting rate unit 60.

The following are two examples of operation of the railcar sensing system of the present invention.

### Example 1:

In this is event hatch 16 opened inside a safe zone or customer facility, with the result being that a message is sent to the system but that an alert message is not sent. Accelerometer 36 detects a tilt angle of 50 degrees which is above a preselected limit for hatch movement. Such hatch tilt state is updated in the event state unit 52. Global positioning system 30 acquires the location of railway tank car 10 and delivers a signal indicative of such position to location processing module 34. Location processing module 34 compares and determines if the location of railway tank car 10 is within a preselected safe zone. In this case, railway tank car 10 is within a preselected safe zone or customer site. Such signal is compared with an event rules location from event rules unit 56 with a signal to event execution unit 54. The result is a signal will be sent to action comparator unit 62 resulting in a message from transmitting comparator 72 message log 72 that is not considered an alert.

### Example 2:

In this event, hatch 16 is open outside of safe zone or customer facility resulting in an alert signal. The steps in such example are as follows. Motion sensor 40 and 42 sense that railway tank car 10 is stationary. Global positioning system receiver 30 senses the global position of railway tank car 10 and provides a location signal to location processing module 34. Location processing module 34 compares the global position of railway tank car 10 with the preselected safe zones or customer sites. It is determined that railway tank car 10 is outside such safe zones. Accelerometer 36 detects that hatch 16 has tilted 50 degrees, which is above a preselected threshold. Such accelerometer 36 sends a signal to event state unit 52 which compares such movement of hatch 16 with the position of railway tank car 10 against data stored in the event rules unit 56. Because it has been determined that railway tank car 10 is outside a safe zone or customer site, event execution unit 54 sends a signal to action comparator unit 62 that hatch 16 has moved or been opened more than a preselected angle, and that railway tank car 10 is outside a preselected safe zone or customer site. Accordingly action comparator unit 62 sends a signal to transmitting comparator 70 which in turn sends a signal to communication unit 74. Communication 74 then will in turn send one or more signals which could include a customer website update or report, a data signal to customer 78, or an alert to customer 79 which could take various forms such as an email or telephone call.

## Claims

1. A railcar sensing system comprising:
a railcar (10) including a hatch (16),
a processing unit with an event engine, and
a position sensing device (30) for detecting the global position of the railcar (10), and sending a position sensing signal to the processing unit,
and **characterised in that** the system further comprises
an accelerometer (36) for sensing the orientation of the hatch (16) with relation to the direction of gravity,
the accelerometer (36) sending a first signal to the processing unit when the orientation of the hatch (16) changes more than a pre-determined amount, against a known closed orientation of the hatch as determined by the event engine,
a transmitting unit,
the processing unit sending a second signal to the transmitting unit upon receipt of the first signal from the accelerometer (36),
a receiver,
the transmitting unit sending a third signal to the receiver indicating that the orientation of the hatch (16) has changed,
wherein upon receipt of the position sensing signal,
the processing unit analyzes the position sensing signal to
determine if the railcar (10) is located outside of a predetermined safe zone,
and using the event engine within the processing unit
to determine if a second signal should be sent to the transmitting unit for generating an alert message.

2. The railcar sensing system of claim 1 further comprising a body structure (18) containing the accelerometer (36), the processing unit, the position sensing device (30), and the transmitting unit; and optionally further comprising a power source contained in the body structure.

3. The railcar sensing system of claim 2 wherein the body structure (18) is attached to the hatch (16) of the railcar.

4. The railcar sensing system of any preceding claim wherein the position sensing device (30) further detects the speed and direction of travel of the railcar, and the position sensing signal sent to the processing unit includes the speed and direction of travel of the railcar (10), and the third signal sent to the receiver includes the speed and direction of travel of the railcar (10).

5. The railcar sensing system of any preceding claim, wherein upon determining that the railcar (10) is located outside a predetermined safe zone, and that the hatch (16) is opened more than a pre-determined amount, an alert message is generated; whereas upon determining that the railcar (10) is located inside a predetermined safe zone, and the hatch (16) is opened more than a pre-determined amount, a message is recorded in a message log but no alert message is sent.

## Patentansprüche

1. Waggonerfassungssystem, umfassend:
einen Waggon (10), der eine Luke (16) beinhaltet,
eine Verarbeitungseinheit mit einer Event Engine, und
eine Positionserfassungsvorrichtung (30) zum Detektieren der globalen Position des Waggons (10) und Senden eines Positionserfassungssignals an die Verarbeitungseinheit,
und **dadurch gekennzeichnet, dass** das System weiter umfasst
einen Beschleunigungsmesser (36) zum Erfassen der Orientierung der Luke (16) in Bezug auf die Richtung von Schwerkraft,
wobei der Beschleunigungsmesser (36) ein erstes Signal an die Verarbeitungseinheit sendet, wenn sich die Orientierung der Luke (16), wie durch die Event Engine festgestellt, um mehr als ein vorbestimmtes Ausmaß gegenüber einer bekannten geschlossenen Orientierung der Luke ändert,
eine Übertragungseinheit,
wobei die Verarbeitungseinheit bei Empfang des ersten Signals vom Beschleunigungsmesser (36) ein zweites Signal an die Übertragungseinheit sendet,
einen Empfänger,
wobei die Übertragungseinheit ein drittes Signal an den Empfänger sendet, das angibt, dass sich die Orientierung der Luke (16) geändert hat,
wobei bei Empfang des Positionserfassungssignals
die Verarbeitungseinheit das Positionserfassungssignal analysiert, um
festzustellen, ob sich der Waggon (10) außerhalb einer vorbestimmten sicheren Zone befindet,
und unter Verwendung der Event Engine innerhalb der Verarbeitungseinheit,
um festzustellen, ob ein zweites Signal an die Übertragungseinheit gesendet werden soll, um eine Warnnachricht zu erstellen.

2. Waggonerfassungssystem nach Anspruch 1, weiter umfassend eine Körperstruktur (18), die den Beschleunigungsmesser (36), die Verarbeitungseinheit, die Positionserfassungsvorrichtung (30) und die Übertragungseinheit enthält; und optional weiter umfassend eine Stromquelle, die in der Körperstruktur enthalten ist.

3. Waggonerfassungssystem nach Anspruch 2, wobei die Körperstruktur (18) an der Luke (16) des Waggons befestigt ist.

4. Waggonerfassungssystem nach einem der vorstehenden Ansprüche, wobei die Positionserfassungsvorrichtung (30) weiter die Fahrgeschwindigkeit und Fahrtrichtung des Waggons detektiert und das Positionserfassungssignal, das an die Verarbeitungseinheit gesendet wird, die Fahrgeschwindigkeit und Fahrtrichtung des Waggons (10) beinhaltet und das dritte Signal, das an dem Empfänger gesendet wird, die Fahrgeschwindigkeit und Fahrtrichtung des Waggons (10) beinhaltet.

5. Waggonerfassungssystem nach einem der vorstehenden Ansprüche, wobei nach Feststellung, dass sich der Waggon (10) außerhalb einer vorbestimmten sicheren Zone befindet und dass die Luke (16) um mehr als ein vorbestimmtes Ausmaß geöffnet ist, eine Warnnachricht erstellt wird; während bei Feststellung, dass sich der Waggon (10) innerhalb einer vorbestimmten sicheren Zone befindet und die Luke (16) um mehr als ein vorbestimmtes Ausmaß geöffnet ist, eine Nachricht in einem Nachrichtenprotokoll aufgezeichnet wird, aber keine Warnnachricht gesendet wird.

## Revendications

1. Système de détection d'autorail, comprenant :
un autorail (10) incluant une portière (16),
une unité de traitement avec un moteur d'événement, et
un dispositif de détection de position (30) pour détecter la position mondiale de l'autorail (10), et envoyer un signal de détection de position à l'unité de traitement,
et **caractérisé en ce que** le système comprend en outre
un accéléromètre (36) pour détecter l'orientation de la portière (16) par rapport à la direction de gravité,
l'accéléromètre (36) envoyant un premier signal à l'unité de traitement lorsque l'orientation de la portière (16) change plus qu'une quantité prédéterminée, contre une orientation fermée connue de la portière telle que déterminée par le moteur d'événement,
une unité de transmission,
l'unité de traitement envoyant un deuxième signal à l'unité de transmission lors de la réception du premier signal de l'accéléromètre (36),
un récepteur,
l'unité de transmission envoyant un troisième signal au récepteur indiquant que l'orientation de la portière (16) a changé,
dans lequel, lors de la réception du signal de détection de position, l'unité de traitement analyse le signal de détection de position pour déterminer si l'autorail (10) est situé à l'extérieur d'une zone de sécurité prédéterminée, et en utilisant le moteur d'événement dans l'unité de traitement, pour déterminer si un deuxième signal doit être envoyé à l'unité de transmission pour générer un message d'alerte.

2. Système de détection d'autorail selon la revendication 1, comprenant en outre une structure de corps (18) contenant l'accéléromètre (36), l'unité de traitement, le dispositif de détection de position (30), et l'unité de transmission ; et comprenant facultativement en outre une source énergétique contenue dans la structure de corps.

3. Système de détection d'autorail selon la revendication 2, dans lequel la structure de corps (18) est attachée à la portière (16) de l'autorail.

4. Système de détection d'autorail selon l'une quelconque des revendications précédentes, dans lequel le dispositif de détection de position (30) détecte en outre la vitesse et la direction de voyage de l'autorail, et le signal de détection de position envoyé à l'unité de traitement inclut la vitesse et la direction de voyage de l'autorail (10), et le troisième signal envoyé au récepteur inclut la vitesse et la direction de voyage de l'autorail (10).

5. Système de détection d'autorail selon l'une quelconque des revendications précédentes, dans lequel, lors de la détermination que l'autorail (10) est situé à l'extérieur d'une zone de sécurité prédéterminée, et que la portière (16) est plus ouverte qu'une quantité prédéterminée, un message d'alerte est généré ; tandis que, lors de la détermination que l'autorail (10) est situé à l'intérieur d'une zone de sécurité prédéterminée, et que la portière (16) est plus ouverte qu'une quantité prédéterminée, un message est enregistré dans un registre de messages mais aucun message d'alerte n'est envoyé.
